# EUROPEAN PATENT SPECIFICATION

(11) **EP 2 627 055 B1**
(45) Date of publication and mention of the grant of the patent: **30.12.2015**
(21) Application number: 13167108.3
(22) Date of filing: 10.07.2009
(51) Int. Cl.: H04L 29/06

(54) **Method for populating a security policy database**
Verfahren zum Anfüllen einer Sicherheits-Policy Datenbank
Procédé pour alimenter une base de données de règles de securité

(43) Date of publication of application: 14.08.2013
(62) Divisional of application: 09780451.2
(73) Proprietor: Telefonaktiebolaget L M Ericsson (publ), 164 83 Stockholm (SE)
(72) Inventor: Krupp, Daniel, HU-1112 Budapest (HU); Szabö, Gergely, HU-1165 Budapest (HU)
(74) Representative: White, Duncan Rohan

(56) References cited:
- US-A1- 2007 025 309
- US-A1- 2008 052 756
- Kuong-Ho Chen et. al.: "ZERO-Conflict: A Grouping-Based Approach for Automatic Generation of IPSec/VPN Security Policies", IFIP , 25 October 2006 (2006-10-25), XP002698467, Retrieved from the Internet: URL:http://rd.springer.com/chapter/10.1007 %2F11907466_17#page-1 [retrieved on 2013-06-07]
- YINGLIUA WU ET AL: "The Design and implementation of router security subsystem based on IPSEC", IEEE TENCON' 02. 2002 IEEE REGION 10 CONFERENCE ON COMPUTERS, COMMUNICATIONS, CONTROL AND POWER ENGINEERING PROCEEDINGS. BEIJING, CHINA, OCT. 28 - 31, 2002; [IEEE REGION 10 ANNUAL CONFERENCE], NEW YORK, NY : IEEE, US, vol. 1, 28 October 2002 (2002-10-28), pages 160-165, XP010628450, DOI: 10.1109/TENCON.2002.1181240 ISBN: 978-0-7803-7490-4

## Description

### Technical Field

The invention relates to a Security Policy Database in a communication network, and in particular to populating a Security Policy Database.

### Background

The security architecture for the Internet Protocol (IPsec) is described in RFC4301: "Security Architecture for the Internet Protocol". RFC4301 describes a framework for IP traffic protection that is based on requirements defined by a Security Policy Database (SPD). A SPD is stored and maintained at a node, and is established and maintained by a user or system administrator, or by an application operating within constraints established by either a user or system administrator of the above.

A Security Policy (SP) contained in the SPD is a rule that tells a node receiving an IP packet how to process that packet. An SP may define what sort of packets should be processed using IPsec, how the IPsec should be applied and so on.

When a node sends or receives an IP packet, the SPD must be consulted if the traffic is sent on an IPsec enabled interface, regardless of whether the IPsec or non-IPsec. Telecom equipments implementing the IPsec framework need to store occasionally a high amount of policies, thus the size of the SPD can be large. The policy matching operation for each IP packet must be performed as quickly as possible in order to maintain the network capacity of the node.

RFC 4301 does not define the structure of an SPD or how it should interface with other functions. However, RFC 4301 does specify that the SPD must store SPs as an ordered list of entries. An example of an existing SBD structure implemented in FreeBSD 7.0 or Linux 2.6.x kernels is described in USAGI IPv6 IPsec Development for Linux. Mitsuru Kanda, Kazunori Miyazawa, Hiroshi Esaki http://hiroshi1.hongo.wide.ad.jp/hiroshi/papers/SAINT2004_kanda-ipsec.pdf. This document describes a policy ordering and storage scheme in which the policy lookup algorithmic cost increases linearly with the number of stored SPs in the event that no relevant SP can be found. When a new SP is provisioned in the SPD, it is provisioned in sequence; in other words, the order of policies in the SPD is determined by the sequence in which they were entered. The SP lookup time therefore depends on when the SP was provisioned in the SPD. In order to improve SP lookup time, caching may be employed to ensure that a policy that applies to one packet may be cached and subsequently retrieved from the cache and applied to subsequent packets that require the same policy.

US2008/0052756 describes security policy databases capable of being fast retrieved while securing sequentially.

### Summary

The inventors have recognised that the speed of lookup of a Security Policy (SP) stored in a Security Policy Database (SPD) can be slow, and have devised methods of populating a SPD that provides a faster SP lookup than known methods when subsequently querying the SPD.

According to a first aspect of the invention, there is provided a method of populating an IPsec SP database. A network node receives a Security Policy (SP) to be inserted into the SP database (SPD) and calculates a priority value to assign to the policy. A policy group stored in the database having the same priority value as the calculated value is located, and the SP is stored in that policy group in the SPD. An advantage of this is that a subsequent query of the SPD can be performed much more quickly by querying the SPD in descending order of priority value until a match is found or it is determined that no SP should be applied to the IP packet. This ensures that policy matching can be done much more quickly.

In an optional embodiment, in the event that a group having the same priority value is not available in the SP database, then a new group is created in the SPD having that priority value.

As an option, the method further comprises calculating a hash value for the SP using information contained in SP Selector fields and associating the hash value with the SP in the SPD. As a further option, the information is selected from any of a source prefix, a source port, a destination prefix, a destination port and an Upper Layer Protocol. According to a second aspect of the invention, there is provided a node for populating an IPSec SPD storing a plurality of SPs arranged in policy groups. The node is provided with a receiver for receiving a SP to be inserted into the SPD and a processor arranged to calculate a priority value to assign to the SP and store the SP with a policy group having the priority value in the SPD. An advantage of this is that policy matching during a subsequent query of the SPD can be done much more quickly.

The processor is optionally arranged to create a new group in the SPD in the event that a group having the same priority value is not already available in the SP database.

The processor is further optionally arranged to calculate a hash value for the SP using information contained a SP Selector field, and associate the hash value with the SP in the SPD.

According to a third aspect of the invention, there is provided a computer program, comprising computer readable code which, when run on a programmable network node, causes the programmable network to perform a method as described above in the first aspect of the invention.

According to a fourth aspect of the invention, there is provided a recording medium storing computer readable code described above in the third aspect of the invention.

According to a fifth aspect of the invention, there is provided a carrier medium carrying the computer readable code described above in the third aspect of the invention.

There is also described a method of querying an IPsec SPD comprising a plurality of groups of SPs that have been assigned a priority value as described above. The following steps are carried out:
a) a network node receives an IP packet;
b) a highest SP priority value is determined;
c) the IPSec Security Protocol database is queried for a set of SPs having the determined SP priority value;
d) a determination is made as to whether a SP action from the set of SPs should be applied to the IP packet;
e) in the event that a SP action should be applied to the IP packet, the SP is returned and applied to the IP packet. However, if no SP action from the set of SPs should be applied to the IP packet, then a lower SP priority value is determined and steps c) to e) are repeated. Furthermore, if there is no set of SPs having a lower priority group, a determination is made that no SP can be found for applying to the IP packet.

As an option, information from the IP packet header is used to determine whether a SP should be applied to the IP packet. As a further option, the method further comprises calculating a hash value using information from the IP packet header, comparing the calculated hash value for the IP packet with hash values associated with a linked list of SPs. In the event that the hash values match, a determination is made whether a SP action contained in the linked list of SPs should be applied to the IP packet, and in the event that the hash values do not match, a determination is made that no SP action from the linked list of SPs should be applied to the IP packet. As a further option, the method uses information selected from any of a source prefix, a source port, a destination prefix, a destination port and an Upper Layer Protocol.

There is also described a node for use in a communication network that can query an SPD populated as described above. The node is provided with an IPsec SPD storing a plurality of SPs arranged in policy groups each policy group having been assigned a priority value. A querying function is also provided for querying the SPD to find a match for an IP packet by searching groups of SPs in descending order of priority value until a match is found or it is determined that no SP should be applied to the IP packet.

As an option, the node further comprises a receiver for receiving an IP packet, an IPsec function for applying an action for the matching SP to the IP packet, and a transmitter for sending the IP packet to a further network node.

As a further option, the querying function is arranged to calculate a hash value using information contained in the IP packet header, and the querying function is further arranged to compare the calculated hash value with a hash value associated with an SP group to determine whether a SP should be applied to the IP packet.

### Brief Description of the Drawings

Some preferred embodiments of the invention will now be described by way of example only and with reference to the accompanying drawings, in which:
Figure 1 illustrates schematically in a block diagram a Security Policy Database and structure according to an embodiment of the invention;
Figure 2 is a flowchart showing an insert operation when provisioning a new Security Policy in a Security Policy Database according to an embodiment of the invention;
Figure 3 illustrates schematically in a block diagram an example priority function bit mapping according to an embodiment of the invention;
Figure 4 is a flowchart showing a lookup operation in a Security Policy Database according to an embodiment of the invention;
Figure 5 is a flowchart showing a match lookup operation in a Security Policy Database according to an embodiment of the invention;
Figure 6 illustrates schematically in a block diagram a node for performing a policy lookup operation; and
Figure 7 illustrates schematically in a block diagram a node for populating a Security Policy database.

### Detailed Description

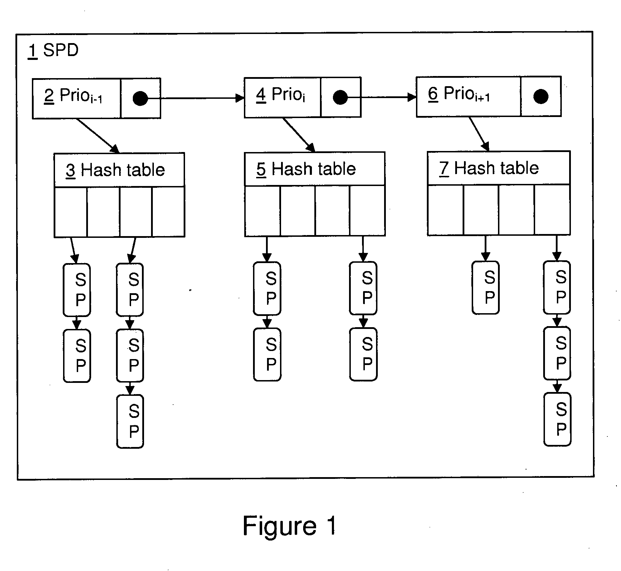

Referring to Figure 1, a Security Policy Database (SPD) 1 is illustrated. A plurality of Security Policies (denoted SP in Figure 1) are provisioned in the database 1. Unlike prior art SPDs, the SPs are grouped together in groups (2, 4, 6) of SPs having the same priority value. A priority value is a value assigned to each SP when it is provisioned in the database.

As can be seen from Figure 1, several SPs may all be accorded the same priority value, and so would all be grouped together in a single policy group (2, 4, 6). The policy groups in the ordered list required by RFC 4301 are ordered by the priority value of the contained policies.

When an IP packet is received at a network node (for example, at a Call Session Control Function in an IMS network), the node must check to see what, if any, SPs apply to the IP packet. It does this by querying the SPD. The SP groups are checked in turn for SPs that match the IP packet. The group with the highest priority is checked first, and if no matching SP is found then the group with the next highest priority is checked, and so on, until a SP is returned an applied to the IP packet, or a message is returned informing the node that no SP matches the packet. In the case that no SP matches the packet, IPsec will not be applied to the packet.

Each SP stored in the SPD comprises a selector and one of more actions, and can be denoted: SP: (SELECTOR, ACTION [, ACTION....])

A selector is sued to determine whether the SP should be applied to an IP packet. If an IP packet matches the selector of an SP then the actions defined by that given SP need to be executed. The selector is defined as follows:
SELECTOR: (SOURCE_ADDRESS, SOURCE_PREFIX, DESTINATION_ADDRESS, DESTINATION_PREFIX, SOURCE_PORT, DESTINATION_PORT, UPPER_LAYER_PROTOCOL)

A source address and a destination address are each a 32 bit (in the case of IPv4) or 128 bit (in the case of IPv6) number, and can be denoted:
SOURCE_ADDRESS: <32 bit integer> | <128 bit integer>
DESTINATION_ADDRESS: <32 bit integer> | <128 bit integer>

The source and destination prefix numbers represent the number of the valuable bits in a selector source or destination address respectively. Valuable bits are always counter from the most significant bits to the least significant bits in the source or destination addresses. The source and destination prefixes are denoted as follows:
SOURCE_PREFIX: <0-32> | <0-128>
DESTINATION_PREFIX: <0-32> | <0-128>

The upper layer protocol is a number that is stored in the Protocol field of an IPv4 datagram or in the Next Header field of an IPv6 datagram. In case of a selector description the upper layer protocol can be set to the ANY value, as follows:
UPPER_LAYER_PROTOCOL: <8 bit integer> | ANY

The source and destination ports are port numbers used by the upper layer protocol. In case of a selector description the source and destination ports can be set to the ANY value as follows:
SOURCE_PORT: <16 bit integer> | ANY
DESTINATION_PORT: <16 bit integer> | ANY

The actions assigned to a given SP are executed in the event that an IP packet matches the selector of the SP. Actions can vary from dropping the matching packet to requiring IPsec processing. Actions described herein are provided by way of example only.

When a new SP is provisioned in the SPD, an insert operation is performed. The insert operation is not frequent; and so in need not be optimized in terms of execution time. The insert operation is described as:
insert(SPD, SP)

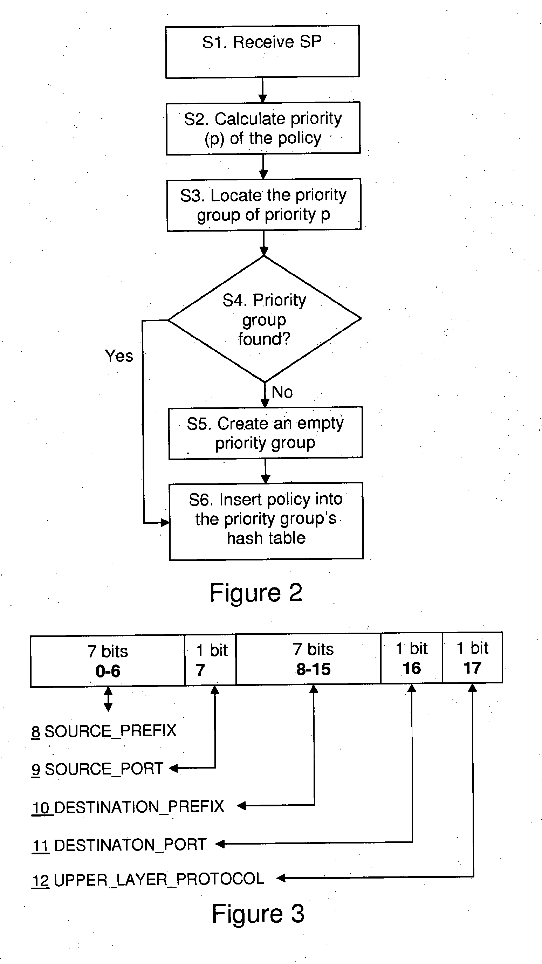

Figure 2 illustrates the steps of inserting a SP, with the following numbering corresponding to the numbering of Figure 2
S1. A new SP is received, for example at a CFCS in an IMS network.
S2. A priority function calculates a priority value of the SP to be inserted:
   p = priority(SP.SELECTOR).

A priority value may, for example, be an integer number to a given SELECTOR: priority(SELECTOR) -> integer

The priority value of an SP is not necessarily unique within an SPD, as many SPs can be accorded the same priority value.

When a policy is inserted into the SPD 1, a priority value is calculated based on the SELECTOR fields and it is inserted into a Policy Group corresponding to the given priority value. The Policy Groups are labelled by the SELECTOR fields of the policy, which were used to calculate the priority for the Policy Group. Therefore each policy group is labelled by: SOURCE_PREFIX, DESTINATION_PREFIX values SOURCE_PORT wildcard, DESTINATION_PORT wildcard and UPPER_LAYER_PROTOCOL wildcard fields.

An exemplary implementation of the priority function is for the priority function to map the SOURCE_PREFIX, DESTINATION_PREFIX, SOURCE_PORT, DESTINATION_PORT and UPPER_LAYER_PROTOCOL values to a bitmap. One possible mapping is shown in Figure 3, in which the SOURCE_PREFIX 8 and DESTINATION_PREFIX 10 values are stored in the 0-6 and 8-15 bits. The 7th bit is set to 0 unless the SOURCE_PORT 9 is ANY. The 16th bit is set to 0 unless DESTINATION_PORT 11 is ANY. The 17th bit is also set to 0 unless UPPER_LAYER_PROTOCOL 12 is ANY. Of course, other bitmaps may be set by network operators depending on the requirements of the SP.
S3. A lookup is performed for the policy group with the same priority value in the policy group chain. To speed up the lookup process a helper hash table can be used, as described below.
S4. If a policy group with the same priority value is found, then the operation continues at step S6, if not then the operation continues at step S5.
S5. As policy group was found having priority value p, a new policy group is created.
S6. A hash value is calculated using a policy group hash function. The input for the hash function is composed from the selected bits of the SP's SELECTOR field. The selected bits are:
   a. the bits specified in the source and destination address fields that are not masked out
   b. the SOURCE_PORT unless it is set to ANY
   c. the DESTINATION_PORT unless it is set to ANY
   d. the UPPER_LAYER_PROTOCOL unless it is set to ANY

The SP is inserted at the head of the linked-list designated by the calculated hash value.

Note, this example describes a linked list structure, but can be any dynamic ordered structure.

In some circumstance (for example database maintenance), a lookup operation is required to ensure that the database contains up to date and relevant information. A lookup operation is used to retrieve a SP with a particular SELECTOR from the SPD 1, and can be described as:
lookup(SPD, SELECTOR) -> SP | NO_SP_FOUND

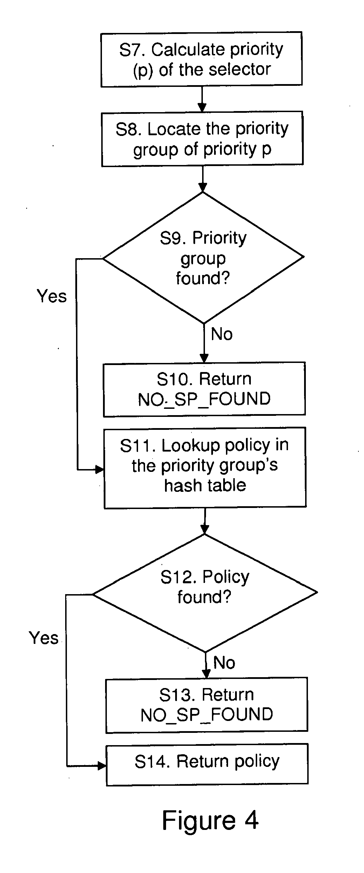

Figure 4 shows the steps of a lookup operation, with the following numbering corresponding to that of the Figure.
S7. At the start of the lookup operation, the priority value of the SELECTOR to be looked up is calculated:
   p = priority(SELECTOR)
S8. The policy group having the same priority value is queried. To speed up the lookup process a helper hash table can be used.
S9. If the policy group is found, then the operation continues at step S 11, and if the policy group having the priority value is not found then the operation continues at step S10.
S10. The policy group is not found, and this result is returned to a node requesting the policy lookup.
S11. The policy group having the same priority value as the selector is found, and so a lookup is preformed of the SPs in the policy group. A hash value is calculated using a policy group hash function, in the same way as described above in step S6. A lookup of the linked list is performed using the calculated hash value for the SP with the specified SELECTOR field.
S12. If the SP is found, the operation continues at step S14, otherwise the operation continues at step S13.
S13. The SP is not found, and this result is returned to a node requesting the policy lookup.
S14. The SP is returned to the node requesting the policy lookup.

For database maintenance, it may be desirable to remove an out of date or incorrect SP from the SPD 1. In this case, a delete operation is performed, which is described as:
delete(SPD, SELECTOR)

The delete operation can be performed by a lookup operation followed by an element removal operation from the linked list that contains the specified SP. As the delete operation is performed infrequently; it need not be optimized in terms of execution time.

The most common operation is a match-lookup operation. When an IP packet is to be sent, the node must determine whether or not a SP should be applied to the packet, and if so then which SP should be applied to the packet. The match lookup operation returns the SP with the highest priority value that has selectors that match the given IP packet. In the event that more than one SP matches the IP packet, then only the SP with the highest priority value is returned. As match-lookup is a frequent operation, it must be highly optimized.

The match-lookup operation is described as:
matchlookup(SPD, IP) -> SP | NO_SP_FOUND
where
matched(IP, SP.selector) == true
and there is no SPi in SPD where
matched(IP, SPi.selector) AND priority(SPi.SELECTOR) > priority(SP)

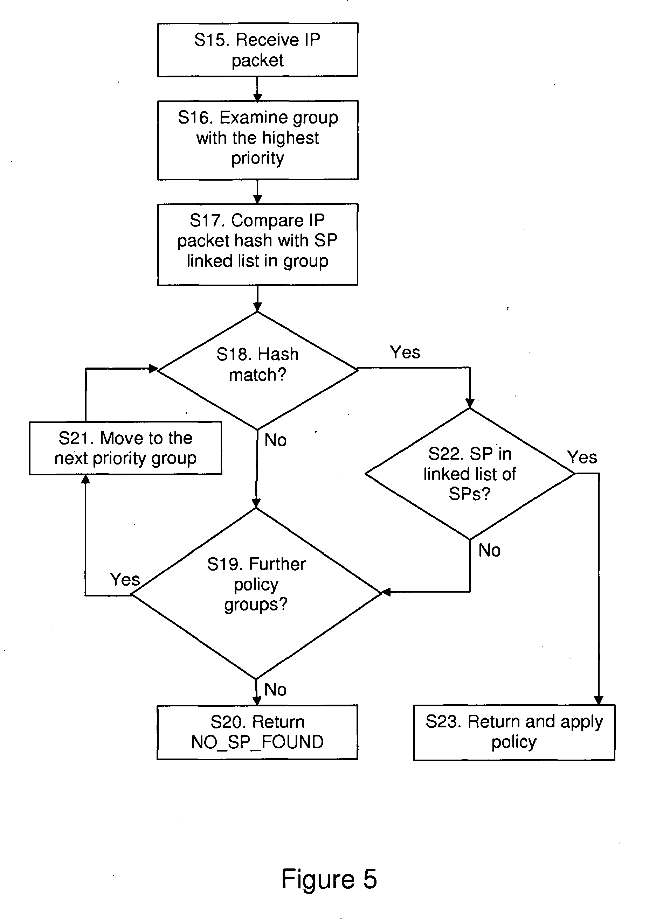

A match lookup operation is illustrated in Figure 5, with the following numbering corresponding to the numbering of Figure 5:
S15. A node such as a CSCF receives an IP packet and must make a decision about applying a Security Policy to the packet.
S16. The SDB 1 is queried. The first policy group searched is the group having the highest priority value.
S17. Take the valuable bits of the IP packet header which is determined by the SELECTOR Label of the Policy Group. A hash value is calculated using a hash function. The input for the hash function is composed from the valuable bits of the IP header fields. The valuable bits are:
   a. the bits specified in the source address field that are not masked out by mask(IP.SOURCE_ADDRESS, PGROUP.SOURCE_MASK)
   b. the bits specified in the destination address field that are not masked out by mask(IP.DESTINATION_ADDRESS, PGROUP.DESTINATION_MASK)
   c. the IP.SOURCE_PORT unless PGROUP.SOURCE_PORT is set to ANY
   d. the IP.DESTINATION_PORT unless PGROUP.DESTINATION_PORT is set to ANY
   e. the IP.UPPER_LAYER_PROTOCOL unless PGROUP.UPPER_LAYER_PROTOCOL is set to ANY

   The calculated hash value is compared against the hash values stored for a linked list of SPs in the policy group having the priority value using a 'matched' function. Matched is a Boolean operation that checks whether an IP datagram matches a given selector. This operation is called for every incoming and outgoing IP packets to determine which policy, if any, applies to the IP packet.
   matched(IP, SELECTOR) -> true | false
      This operation can be described with the following pseudo-code:
      (mask(IP.SOURCE_ADDRESS, SELECTOR.SOURCE_PREFIX) == SELECTOR.SOURCE_ADDRESS)
      AND
      (mask(IP.DESTINATION_ADDRESS, SELECTOR.DESTINATION_PREFIX) == SELECTOR.DESTINATION_ADDRESS)
      AND
      (IP.SOURCE_PORT == SELECTOR.SOURCE_PORT ∥ SELECTOR.SOURCE_PORT == ANY)
      AND
      (IP.DESTINATION_PORT == SELECTOR.DESTINATION_PORT || SELECTOR.DESTINATION_PORT == ANY)
      AND
      (IP.UPPER_LAYER_PROTOCOL == SELECTOR.UPPER_LAYER_PROTOCOL || SELECTOR.UPPER_LAYER_PROTOCOL == ANY)
S18. If the calculated hash value matches a SP hash value stored in the SDB 1, then the operation continues at step S22, otherwise the operation continues at step S19.
S19. As no matching SP was found in the previous policy group, a determination is made to determine whether a further policy group exists having a lower priority value. If so, then the operation continues at step S21, and if not then the operation continues at step S20.
S20. By this point in the operation, all of the policy groups have been queried and no SP has been found that applies to the IP packet, so a result of no SP found is returned. The IP packet is then processed without using any SP.
S21. The policy group with the next lowest priority value is selected, and the operation repeats from step S17.
S22. A determination is made to find an SP in linked list of SPs that matches the IP packet. If an SP can be found, then the process continues at step S23, otherwise the process reverts to step S19.
S23. An SP in the group with the highest priority has been found and this SP is returned. The SP is then applied to the IP packet.

In terms of the algorithmic costs of the operations described above, the insert operation, lookup operation and delete operation each require two hash table lookups of stored policies in the SPD. A match lookup operation requires that an attempt will be made to match the IP packet with an SP stored in the policy group with the highest priority and this process continues until the first matching SP is found. If there are P policy groups, then in the worst case scenario, P hash lookups must be performed. It will be apparent that the maximum number of policy groups is independent of the number of SPs stored in the SPD. It only depends on the length of the selector fields used for the priority calculation. Thus the match-lookup cost is O(1) with the number of stored policies in the SPD.

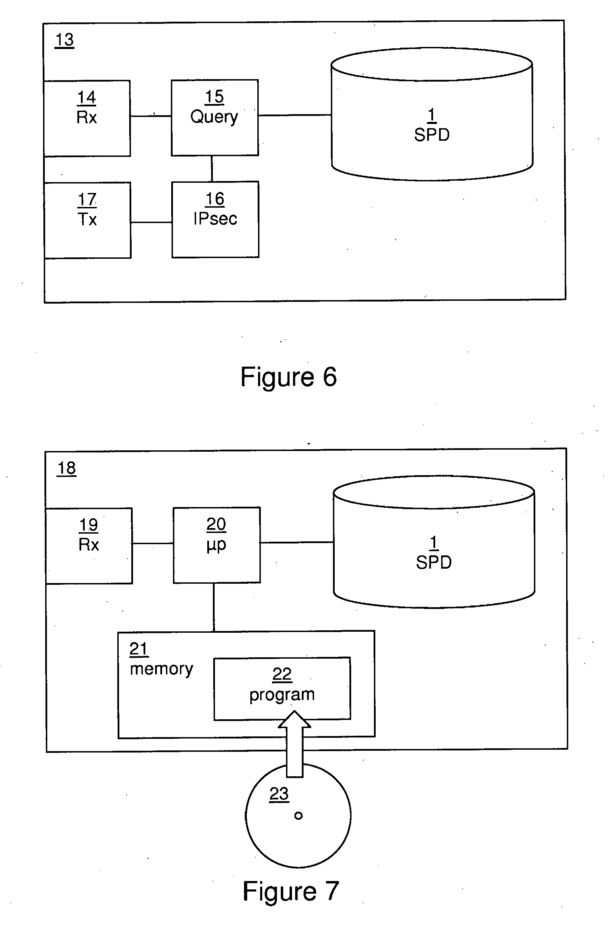

Turning now to Figure 6, a node 13 such as a CSCF is illustrated for performing a policy lookup operation. A receiver 14 is provided for receiving an IP packet. A querying function 15, typically implemented as a processor, is provided for querying the SPD 1 and obtaining from the SPD a returned matching SP. Note that in this example, the SPD is located at the node, but in many implementations the SPD will be located remotely from the node. An IPsec function 16 is provided for applying an action for the returned matching SP to the IP packet. A transmitter 17 is also provided for sending the IP packet to a further network node. The SPD 1 illustrated in Figure 6 is structured and operates in the same way as the SPD illustrated in Figure 1.

Turning now to Figure 7, a node 18 for populating a SPD 1 Security Policy database is illustrated. The node 18 is provided with a receiver 19 for receiving a SP to be inserted into the SPD 1, and a processor 20 arranged to calculate a priority value to assign to the SP and store the SP with a policy group having the priority value in the SPD 1. The node 18 may also be provided with a computer readable medium in the form of a memory 21 which can be used to store a program 22 which, when executed by the processor 20, causes the node 18 to behave as described above. Note that the program 22 may alternatively be stored on an external carrier medium 23 such as a flash drive or a Compact Disk.

The invention introduces a selector based policy ordering. RFC4301 does not specify an ordering method but does requires the SPD 1 to be ordered. A well-chosen priority function facilitates the coordination of multiple SPD users, as this solution is less prone to unwanted policy overriding. Another advantage is the efficient match-lookup operation, which is the most common operation in the SPD. Policies are returned on the basis of an assigned priority value, rather than on the basis of when they were provisioned in the SBD 1.

It will be appreciated that variations from the above described embodiments may still fall within the scope of the invention. For example, the invention is described by way of example with reference to a CSCF in an IMS network, but will be appreciated that it can equally apply to any type of network that uses IPsec Security Policies.

The following abbreviations have been used in this specification:
- IP: Internet Protocol
- SP: Security Policy
- SPD: Security Policy Database
- TCP: Transmission Control Protocol
- UDP: User Datagram Protocol

## Claims

1. A method of populating an IPsec Security Policy database, the method comprising:
at a network node, receiving (S1) a Security Policy to be inserted into the Security Policy database; the method **characterised by**:
calculating (S2) a priority value to assign to the policy;
locating (S3) a policy group stored in the database having the same priority value;
storing (S6) the Security Policy having the priority value with the policy group in the Security Policy database.

2. The method according to claim 1, further comprising, in the event that a group having the same priority value is not available in the Security Policy database, creating a new group in the Security Policy database having that priority value.

3. The method according to claim 1 or 2, further comprising calculating a hash value for the Security Policy using information contained in Security Policy Selector fields and associating the hash value with the Security Policy in the Security Policy database.

4. The method according to claim 3, wherein the information is selected from any of a source prefix, a source port, a destination prefix, a destination port and an Upper Layer Protocol.

5. A node (18) for populating an IPSec Security Policy database storing a plurality of Security Policies arranged in policy groups, the node comprising:
a receiver (19) for receiving a Security Policy to be inserted into the Security Policy database; the node **characterised by**:
a processor (20) arranged to calculate a priority value to assign to the Security Policy and store the Security Policy with a policy group having the priority value in the Security Policy database.

6. The node (18) according to claim 5, wherein the processor (20) is further arranged to, in the event that a group having the same priority value is not available in the Security Policy database, create a new group in the Security Policy database having that priority value.

7. The node (18) according to claim 5 or 6, wherein the processor (20) is further arranged to calculate a hash value for the Security Policy using information contained a Security Policy Selector field, and associate the hash value with the Security Policy in the Security Policy database.

8. A computer program (22), comprising computer readable code which, when run on a programmable network node (18), causes the programmable network node (18) to perform a method according to any one of claims 1 to 4.

9. A recording medium (21; 23) storing computer readable code according to claim 8.

10. A carrier medium comprising the computer program according to claim 8.

## Patentansprüche

1. Verfahren zum Besetzen einer IPSec-Sicherheits-Policy-Datenbank, wobei das Verfahren umfasst:
in einem Netzwerkknoten erfolgendes Empfangen (S1) einer in die Sicherheits-Policy-Datenbank einzufügenden Sicherheits-Policy; wobei das Verfahren **gekennzeichnet ist durch**:
Berechnen (S2) eines der Policy zuzuweisenden Prioritätswerts;
Auffinden (S3) einer in der Datenbank gespeicherten Policy-Gruppe, die den gleichen Prioritätswert hat;
Speichern (S6) der Sicherheits-Policy, die den Prioritätswert hat, mit der Policy-Gruppe in der Sicherheits-Policy-Datenbank.

2. Verfahren nach Anspruch 1, ferner umfassend, falls in der Sicherheits-Policy-Datenbank keine Gruppe verfügbar ist, die den gleichen Prioritätswert hat: Erzeugen einer neuen Gruppe in der Sicherheits-Policy-Datenbank, die diesen Prioritätswert hat.

3. Verfahren nach Anspruch 1 oder 2, ferner umfassend: Berechnen eines Hash-Werts für die Sicherheits-Policy unter Verwendung von Information, die in Sicherheits-Policy-Selektorenfeldern enthalten ist, und Assoziieren des Hash-Werts mit der Sicherheits-Policy in der Sicherheits-Policy-Datenbank.

4. Verfahren nach Anspruch 3, worin die Information aus einem von Folgenden ausgewählt wird: einem Quellpräfix, einem Quellport, einem Zielpräfix, einem Zielport und einem Protokoll höherer Schicht.

5. Knoten (18) zum Besetzen einer IPSec-Sicherheits-Policy-Datenbank, die eine in Policy-Gruppen angeordnete Vielzahl von Sicherheits-Policies speichert, wobei der Knoten umfasst:
einen Empfänger (19) zum Empfangen einer in die Sicherheits-Policy-Datenbank einzufügenden Sicherheits-Policy; wobei der Knoten **gekennzeichnet ist durch**:
einen Prozessor (20), der dafür eingerichtet ist, einen der Sicherheits-Policy zuzuweisenden Prioritätswert zu berechnen und die Sicherheits-Policy mit einer Policy-Gruppe, die den gleichen Prioritätswert hat, in der Sicherheits-Policy-Datenbank zu speichern.

6. Knoten (18) nach Anspruch 5, worin der Prozessor (20) ferner dafür eingerichtet ist, falls in der Sicherheits-Policy-Datenbank keine Gruppe verfügbar ist, die den gleichen Prioritätswert hat, eine neue Gruppe in der Sicherheits-Policy-Datenbank zu erzeugen, die diesen Prioritätswert hat.

7. Knoten (18) nach Anspruch 5 oder 6, worin der Prozessor (20) ferner dafür eingerichtet ist, einen Hash-Wert für die Sicherheits-Policy unter Verwendung von Information, die in einem Sicherheits-Policy-Selektorenfeld enthalten ist, zu berechnen und den Hash-Wert mit der Sicherheits-Policy in der Sicherheits-Policy-Datenbank zu assoziieren.

8. Computerprogramm (22), umfassend computerlesbaren Code, der, wenn er auf einem programmierbaren Netzwerkknoten (18) läuft, den programmierbaren Netzwerkknoten (18) veranlasst, ein Verfahren nach einem der Ansprüche 1 bis 4 durchzuführen.

9. Aufzeichnungsmedium (21; 23), das computerlesbaren Code nach Anspruch 8 speichert.

10. Trägermedium, welches das Computerprogramm nach Anspruch 8 umfasst.

## Revendications

1. Procédé d'alimentation d'une base de données de politiques de sécurité IPsec, le procédé consistant à :
au niveau d'un noeud de réseau, recevoir (S1) une politique de sécurité à insérer dans la base de données de politiques de sécurité ; le procédé étant **caractérisé par** les étapes consistant à :
calculer (S2) une valeur de priorité à assigner à la politique ;
localiser (S3) un groupe de politiques stocké dans la base de données et présentant la même valeur de priorité ;
stocker (S6) la politique de sécurité présentant ladite valeur de priorité avec ledit groupe de politiques dans la base de données de politiques de sécurité.

2. Procédé selon la revendication 1, comprenant en outre, dans le cas où un groupe présentant la même valeur de priorité n'est pas disponible dans la base de données de politiques de sécurité, une étape consistant à créer dans la base de données de politiques de sécurité un nouveau groupe présentant ladite valeur de priorité.

3. Procédé selon la revendication 1 ou 2, comprenant en outre une étape consistant à calculer une valeur de hachage pour la politique de sécurité en utilisant des informations contenues dans des champs d'un sélecteur de politique de sécurité et associer la valeur de hachage à ladite politique de sécurité dans la base de données de politique de sécurité.

4. Procédé selon la revendication 3, dans lequel les informations sont sélectionnées à partir de l'un quelconque des éléments parmi un préfixe source, un port source, un préfixe de destination, un port de destination et un protocole de couche supérieure.

5. Noeud (18) permettant d'alimenter une base de données de politiques de sécurité IPSec stockant une pluralité de politiques de sécurité agencées en groupes de politiques, le noeud comprenant :
un récepteur (19) permettant de recevoir une politique de sécurité à insérer dans la base de données de politiques de sécurité ; le noeud étant **caractérisé par** :
un processeur (20) agencé pour calculer une valeur de priorité à assigner à la politique de sécurité et stocker la politique de sécurité avec un groupe de politiques présentant ladite valeur de priorité dans la base de données de politiques de sécurité.

6. Noeud (18) selon la revendication 5, dans lequel le processeur (20) est en outre agencé pour, dans le cas où un groupe présentant la même valeur de priorité n'est pas disponible dans la base de données de politiques de sécurité, créer dans la base de données de politiques de sécurité un nouveau groupe présentant ladite valeur de priorité.

7. Noeud (18) selon la revendication 5 ou 6, dans lequel le processeur (20) est en outre agencé pour calculer une valeur de hachage pour la politique de sécurité en utilisant des informations contenues dans un champ de sélecteur de politique de sécurité, et associer la valeur de hachage à ladite politique de sécurité dans la base de données de politiques de sécurité.

8. Programme informatique (22), comprenant un code lisible par un ordinateur qui, lorsqu'il est exécuté sur un noeud de réseau programmable (18), amène le noeud de réseau programmable (18) à mettre en oeuvre un procédé selon l'une quelconque des revendications 1 à 4.

9. Support d'enregistrement (21 ; 23) stockant un code lisible par ordinateur selon la revendication 8.

10. Support porteur comprenant le programme informatique selon la revendication 8.
